# EUROPEAN PATENT APPLICATION

(11) **EP 2 953 300 A1**
(43) Date of publication of application: **09.12.2015**
(21) Application number: 14305844.4
(22) Date of filing: 04.06.2014
(51) Int. Cl.: H04L 12/715, H04L 29/08

(54) **Method for advertising storage capability of a node of a routed telecommunication network, and a node for implementing this method**

(71) Applicant: Alcatel Lucent, 92100 Boulogne-Billancourt (FR)
(72) Inventor: Vigoureux, Martin, 91620 Nozay (FR); Peloso, Pierre, 91620 Nozay (FR)
(74) Representative: Sciaux, Edmond

(57) **Abstract**

A method for advertising storage capability of a first node in a routed telecommunication network comprises, in the first node, a step of providing an indication (5, 1') in a message sent by said first node. This indication indicates, at least, that the node sending the message comprises storage resources that may be used by applications using the network.

## Description

### BACKGROUND OF THE INVENTION

### Field of the invention

The present invention generally relates to storage resources embedded in nodes of a telecommunication network, in particular in the routers and switches participating to the routing system of this network.

Network equipment vendors are making claims that their routers are now capable of hosting line cards themselves equipped with storage resources. However, no solution exists today as how to dynamically distribute the information about the existence and availability of such storage resources so that they can be used by applications and traffic using the network. Considering that there is now no wide deployment of in-router storage resources, and that, in the case of effective deployments, the use of such storage resources is such that their advertisement would not be required, no solution exists for distributing information about the existence and availability of storage resources in a routed network.

### Description of the prior art

One could envision relying on management software products used for the network planning and engineering and also for traffic engineering. These software products rely on the knowledge of the equipments deployed and thus would be able to take into account storage information. Storage information would have been entered by the network operator but these software products are unable to match the dynamics of traffic changes and resources availability. Therefore it would not be practical to run these software products each time storage resources availability changes because this method would fail to match the dynamics of resources usage in networks.

Thus, there is a need to provide a technical solution for automatically advertizing storage capabilities in a routed telecommunication network. This can be solved by applying, the method and the router according to the invention.

### SUMMARY OF THE INVENTION

A first object of the invention is a method for advertising storage capability of a first node in a routed telecommunication network, characterized in that the method comprises, in the first node, a step of providing an indication in a message sent by said first node, this indication indicating, at least, that the node sending the message comprises storage resources that may be used by applications using the network.

In a second node, the method according to the invention comprises the step of seeking an indication in a message sent by said first node, this indication indicating, at least, that the node sending the message comprises storage resources that may be used by applications using the network.

Thanks to the indication inserted into a classical routing protocol message, the existence of storage resources hosted in a switching or routing device, participating in the routing system, can be advertised to all the nodes that can receive the routing protocol messages. So this information is made available to other network message elements and applications. As the routing protocol messages are sent periodically, the information about the existence of storage resources can be dynamically updated. It allows a dynamic exploitation of storage resources distributed in the network.

According to a first embodiment, the step of providing an indication comprises inserting an additional bit into a classical Type-Length-Value (TLV) message element of a classical routing protocol advertisement message sent by said first node. This additional bit only indicates that the node sending the message comprises, or does not comprise, storage resources that may be used by applications using the network.

According to a second embodiment, the step of providing an indication comprises inserting a new type of TLV message element into a routing protocol message sent by said first node.

Thanks to the TLV message element inserted in routing protocol messages, at least the existence of storage resources hosted in a switching or routing device participating in the routing system can be advertised to all the nodes that can receive the routing protocol messages. In a preferred embodiment said TLV message element further indicates some characteristics of the storage resources that may be used by applications using the network.

A second object of the present invention is a network node characterized in that it comprises a processor configured for executing the method according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the following figures:
- Figure 1 represents an exemplary Type-Length-Value message element wherein an additional bit is inserted according to the invention, for carrying information about the existence of storage resources.
- Figure 2 represents an exemplary Type-Length-Value message element comprising a new type in the classical field type. This new type, according to the invention, indicates the existence of storage resources. Optionally the field Value indicates some characteristics of the storage resources.

### DETAILED DESCRIPTION OF THE PREFERRED EMBODIMENTS

For given storage resources a node should, at least, advertise the existence of these storage resources.

According to the invention, the existence of storage resources is advertised by means of an enhanced existing routing protocol. For instance, it can be advertised by enhanced messages of the protocol Open Shortest Path First (OSPF) or the protocol Intermediate System to Intermediate System (IS-IS). Each classical advertisement message of a routing protocol comprises at least one Type-Length-Value (TLV) message element.

According to a first embodiment of the method according to the invention, a classical routing protocol is enhanced by inserting an additional bit in a classical message element of an advertisement message of this protocol, sent by the node.

A node that comprises storage resources that can be used by applications using the network, inserts the additional bit, with a value 1 for instance, in a message element of this classical advertisement message of the routing protocol.

A node that does not comprise storage resources that can be used by applications using the network, inserts the additional bit, with a value 0, in a message element of this classical advertisement message of the routing protocol.

A classical routing protocol sends "link advertisement messages" or "node advertisement messages" in order to fulfill the routing function. According to the invention, the advertisement of the information about storage resources is done either by enhanced "link advertisement messages" or by enhanced "node advertisement messages" of the routing protocol. As the routing protocol advertisement messages are sent periodically, the sent information about the existence of storage resources can be dynamically updated. It allows a dynamic exploitation of storage capacities distributed in the network.

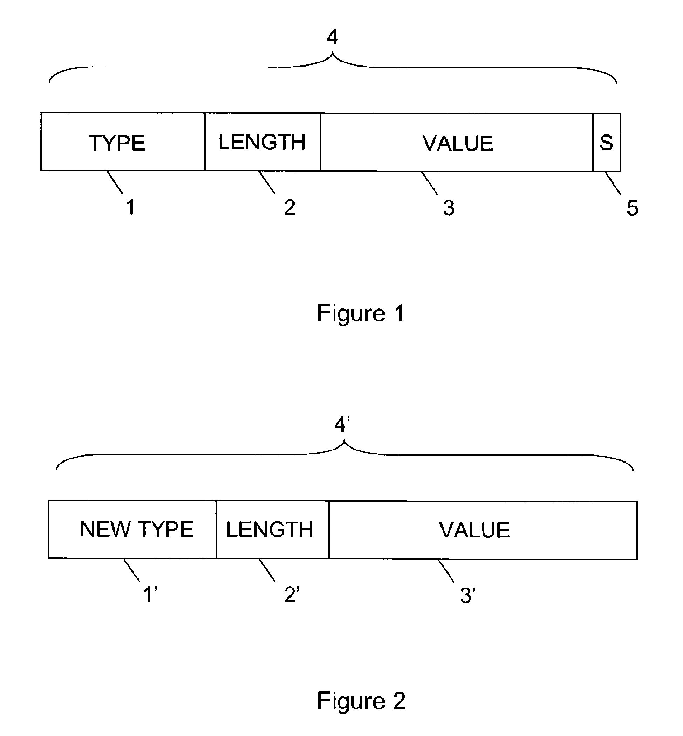

Figure 1 represents an exemplary routing protocol advertisement message enhanced according to the first embodiment. For instance this message comprises a single TLV message element 4 modified according to the invention. It comprises:
- a classical field 1 called TYPE,
- a classical field 2 called LENGTH,
- a classical field 3 called VALUE,
- and an additional bit 5 inserted after the classical field 3.

The field 1 TYPE and the field 2 LENGTH are fixed in size (typically 1-4 bytes), and the field 3 VALUE is of variable size.

These fields are classically used as follows:
- TYPE contains a binary code, often simply alphanumeric, which indicates the type of information present in the field 3 VALUE.
- LENGTH contains the size of the field 3 VALUE (typically in bytes);
- VALUE contains variable-sized series of bytes which represent the characteristic of the storage resources of the node.

In this example, the value S of the additional bit 5 is 1 if the node comprises storage resources, and 0 otherwise.

Some advantages of using a TLV message element, for carrying the additional bit indicating the existence of storage resources, are:
- TLV sequences are easily searched using generalized parsing functions.
- The message elements of the new type, which are received at an older node, can be safely skipped and the rest of the advertisement message can be classically parsed.
- TLV message elements can be placed in any order inside an advertisement message body.
- TLV message elements are typically used in a binary format which makes parsing faster and the data smaller.
- It is easy to generate a XML text from a TLV message element to make human inspection of the data possible.

Within the protocol OSPF, the additional bit 5 is inserted into the classical "Router Information (RI) opaque Link-state Advertisement" message defined in the request for comments RFC 4970.

Within the protocol IS-IS, the additional bit 5 is inserted into the classical TLV message element called "IS-IS Router CAPABILITY TLV" defined in the request for comments RFC 5305.

A first embodiment of the node according to the invention comprises a processor configured for inserting an additional bit 5 into a TLV message element 4 of a routing protocol message, this bit indicating whether the node comprises storage resources.

As concerns the reception of the information about the storage resources of first node, a first embodiment of the node according to the invention further comprises a processor configured for seeking an additional bit 5 inserted into a classical TLV message element 4 of a routing protocol message received from said first node, and for concluding that:
- the first node comprises storage resources that can be used by applications using the network, if said additional bit 5 is found in the classical TLV message element 4 of the routing protocol message received from said first node, and has a first value;
- the first node does not comprises storage resources that can be used by applications using the network, if said new type of TLV message element 4 is found in the classical TLV message element 4 of the routing protocol message received from said first node, and has a complementary value.

If the receiving node is an old node that cannot apply the method according to the invention, it only takes into account the bits of the field 3 VALUE, that have been announced by the field 2 LENGTH, i. e. it does not consider the additional bit 5.

In a second embodiment of the method according to the invention, the step of providing an indication comprises the step of inserting a new type of Type-Length-Value (TLV) message element, into a classical routing protocol message sent by said first node. Each message element of this new type is identified by a specific new binary code in the field TYPE. This specific new binary code indicates the existence of storage resources.

Optionally, the field VALUE of said TLV message element further indicates some characteristics of the storage resources that may be used by applications using the network.

Figure 2 represents an exemplary TLV message element 4', according to the second embodiment of the method. It comprises:
- a field 1' called TYPE,
- a field 2' called LENGTH,
- and a field 3' called VALUE.

The field 1' TYPE and the field 2' LENGTH are fixed in size (typically 1-4 bytes), and the field 3' VALUE is of variable size.

These fields are classically used as follows:
- TYPE contains a binary code, often simply alphanumeric, which indicates the type of information present in the field 3' VALUE.
- LENGTH contains the size of the field 3' VALUE (typically in bytes);
- VALUE contains variable-sized series of bytes which represent some characteristics of the storage resources of the node.

According to the second embodiment of the method according to the invention, the field 1' TYPE contains a new specific binary code identifying the TLV message element as carrying storage resources information, i. e. at least the existence of storage resources (This new specific binary code will be assigned by the Internet Assigned Numbers Authority (IANA) in case of standardization).

For given storage resources, a node should advertise at least the existence of these storage resources and preferably advertise the total addressable storage capacity, and one of the two following message elements of information:
- Unreserved storage capacity of the given storage resources.
- Reserved storage capacity of the given storage resources.

In case reservations priorities are defined by the operator, the reserved or unreserved storage capacities could be given per level of priority

Optionally one or more of the following storage characteristics can be advertised in addition:
- Stored data persistence policy of the given storage resources.
- Level of priorities of the given storage resources.
- Maximum total storage capacity that can be reserved by a same entity in the given storage resources.

The existence of storage resources and their characteristics can be advertised by enhanced messages of one of the following routing protocols:

The protocol Open Shortest Path First (OSPF), or the protocol Intermediate System to Intermediate System (IS-IS).

Within such routing protocols, optional information may be encoded as a Type-Length-Value (TLV) message element inside a routing protocol message. A sub-TLV message element can be also be inserted into a bigger TLV message element. A node that comprises storage resources that can be used by applications using the network, inserts the new type of message element in advertisement messages of this routing protocol.

Some advantages of using a TLV message element for advertising the characteristics of the storage resources are:
- TLV sequences are easily searched using generalized parsing functions.
- The message elements of the new type, which are received at an older node, can be safely skipped and the rest of the advertisement message can be classically parsed.
- TLV message elements can be placed in any order inside an advertisement message body.
- TLV message elements are typically used in a binary format which makes parsing faster and the data smaller.
- It is easy to generate a XML text from a TLV message element to make human inspection of the data possible.

According to the second embodiment, the classical advertisement messages of the routing protocol are enhanced by inserting a TLV message element in each of the classical advertisement messages. If a storage resource, hosted on a node of the network, is accessible by other nodes from all links, it is preferable to advertise this information as part of the "node advertisement messages". On the contrary, if the storage resources are only accessible via a specific link, it is preferable to advertise this information as part of the "link advertisement messages".

For both protocols OSPF and IS-IS, the inserted new type of TLV message element 4' (called Storage Capability TLV for instance) according to the invention preferably comprises a field 3' VALUE containing encoded information about some characteristics of the storage resources in the node (for instance a router) that is sending the node or link advertisement messages carrying this TLV message element.

The way the information is encoded is again a matter of engineering design. Most likely, 32 bits fields will be used.

According to a third embodiment of the method according to the invention, a TLV message element with no field 3' VALUE could be generated, only giving the information that some storage resources exists in the node sending the advertisement message carrying this TLV message element; i. e. without any information on the total/unused/unreserved storage capacity.

For the protocol OSPF, there are two options to advertise the information about storage resources:
- By defining a new type of TLV message element (called, for instance, "OSPF Router Information (RI) TLV) and inserting it into classical messages of the "Router Information (RI) opaque Link-state Advertisement" defined in the request for comments RFC 4970. (This RFC mentions that the Router Informational Capabilities TLV may be followed by optional TLV message elements that further specify a capability).
- Or by defining a new type of TLV message element as a sub-TLV-message element of a classical message element called TE (Traffic Engineering) Link TLV message element of Type 2, which itself is an opaque Link-state Advertisement of type 1, defined in RFC 3630.

For the protocol IS-IS, there are two options to advertise the information about storage resources:
- By defining the new type of TLV message element as a sub-TLV message element of the classical message element called "IS-IS Router CAPABILITY TLV" defined in the request for comments RFC 5305.
- Or by defining a new type of TLV message element as a sub-TLV message element of the message element called "Extended IS Reach-ability TLV" defined in the request for comments RFC 5305.

A node according to the second variant of the method comprises a processor configured for:
- Generating a TLV message element 4' carrying information about storage resources, as described above; this information being updated as the characteristics of the storage resources change.
- Adding each generated TLV message element 4' to an appropriate advertisement packet, as described above.

As concerns the reception of the information about the storage resources of a first node, a second network node according to the second variant of the method comprises a processor configured for seeking a new type of TLV message element 4' from a routing protocol message received from said first node, and concluding that:
- the first node comprises storage resources that can be used by applications using the network, if said new type of TLV message element 4' is found in the routing protocol message received from said first node;
- or the first node does not comprises storage resources that can be used by applications using the network, if said new type of TLV message element 4' cannot be found in the routing protocol message received from said first node.

Preferably, the processor is further configured for extracting, from said new type of TLV message element 4' inserted in a routing protocol message received from said first node, some characteristic of the storage resources that can be used in the first node.

The implementation of a network node comprising a processor configured for executing the method according to the invention is within the scope of a man skilled in art.

If the second node is old and cannot apply the second variant of the method according to the invention, it does not recognize the TYPE contained in the field 1'. So it does not consider the message element advertizing the storage capabilities of the first node.

The means for enabling the protocols OSPF or ISIS to be able to have knowledge of the initial capacity values to be encoded is outside the scope of this invention, but will most surely be at least achievable by means of manual configuration, just like for many other operational parameters of distributed control protocols.

A classical routing protocol sends "link advertisement messages" or "node advertisement messages" in order to fulfill the routing function. For all the embodiments of the method according to the invention, the advertisement of the information about storage resources is done either by enhanced "link advertisement messages" or by enhanced "node advertisement messages" of a classical routing protocol. As the routing protocol advertisement messages are sent periodically, the sent information about storage capabilities can be dynamically updated. It allows a dynamic exploitation of storage capacities distributed in the network.

The implementation of a network node comprising a processor configured for executing the method according to the invention is within the scope of a man skilled in art.

## Claims

1. A method for advertising storage capability of a first node in a routed telecommunication network, **characterized in that** the method comprises, in the first node, a step of providing an indication (5, 1') in a message sent by said first node, this indication indicating, at least, that the node sending the message comprises storage resources that may be used by applications using the network.

2. A method according to claim 1, comprising, in a second node, the step of seeking an indication in a message sent by said first node, this indication indicating, at least, that the node sending the message comprises storage resources that may be used by applications using the network.

3. The method of claim 1, wherein the step of providing an indication comprises inserting an additional bit (5) into a classical Type-Length-Value (TLV) message element (4) of a classical routing protocol advertisement message sent by said node.

4. A method according to claim 3, wherein the routing protocol is the protocol Open Shortest Path First, and wherein said additional bit (5) is inserted into a classical "Router Information (RI) opaque Link-state Advertisement" message defined in the request for comments RFC 4970.

5. A method according to claim 2, wherein the routing protocol is the protocol Intermediate System to Intermediate System, and wherein said additional bit (5) is inserted into the classical TLV message element called "IS-IS Router CAPABILITY TLV" defined in the request for comments RFC 5305.

6. A method according to claim 3, comprising, in a second node, the step of seeking an additional bit (5) in a classical TLV message element (4) of a routing protocol message received from said first node, and the step of concluding that:
- the first node comprises storage resources that may be used by applications using the network, if said additional bit (5) is found and has a first value;
- the first node does not comprises storage resources that can be used by applications using the network, if said additional bit (5) is found and has a complementary value.

7. The method of claim 1, wherein the step of providing an indication comprises inserting a new type of Type-Length-Value (TLV) message element (4') into a routing protocol message sent by said first node.

8. The method of claim 7, wherein said TLV message element (4') further indicates some characteristic of the storage resources that may be used by applications using the network.

9. A method according to claim 7, wherein the new type of TLV message element (4') is identified by a specific binary code in a field TYPE (1') of said TLV message element (4'), this specific binary code identifying the type of the TLV message element as carrying information about storage resources.

10. A method according to claim 9, wherein the new type of TLV message element (4') further comprises:
- a second field VALUE (3) containing encoded information about the storage capacity in the node;
- and a third field LENGTH (2) giving the length of the second field VALUE (3).

11. A method according to claim 7, wherein the routing protocol is the protocol Open Shortest Path First, and wherein the new type of TLV message element (4') is a TLV message element inserted into routing messages of the classical Router Information opaque Link-state Advertisement defined in the request for comments RFC 4970.

12. A method according to claim 7, wherein the routing protocol is the protocol Open Shortest Path First, and wherein said new type of TLV message element (4') is a sub-TLV message element inserted into the classical Traffic Engineering Link TLV message element of Type 2, which itself is an opaque Link-state Advertisement of type 1, defined in the request for comments RFC 3630.

13. A method according to claim 7, wherein the routing protocol is the protocol Intermediate System to Intermediate System, and wherein said new type of TLV message element is a sub-TLV message element inserted into the Intermediate System to Intermediate System Router Capability TLV message element defined in the request for comments RFC 4971.

14. A method according to claim 7, wherein the routing protocol is the protocol Intermediate System to Intermediate System, and wherein said new type of TLV message element is a sub-TLV message element inserted into the Extended Intermediate System Reach-ability TLV message element defined in the request for comments RFC 5305.

15. A method according to claim 2, wherein the step of seeking an indication in a message sent by said first node comprises, in a second node, the step of seeking a new type of TLV message element (4') from a routing protocol message received from said first node, and the step of concluding that:
- the first node comprises storage resources that can be used by applications using the network, if said new type of TLV message element (4') is found in the routing protocol message received from said first node;
- the first node does not comprises storage resources that can be used by applications using the network, if said new type of TLV message element (4') cannot be found in the routing protocol message received from said first node.

16. A method according to claim 15, further comprising, in the second node, the step of extracting, from said new type of TLV message element (4') inserted in a routing protocol message received from said first node, some characteristic of the storage resources that can be used in the first node.

17. A network node **characterized in that** it comprises a processor configured for executing the method according to one of the claims 1 to 16.

18. A digital data storage medium storing a set of machine executable program instructions, which, when executed on a computer, cause the computer to perform all the method steps of the method according to claims 1 to 16.

19. A computer program product comprising computer-executable instructions for performing, when the program is run on a computer, all the method steps of the method according to claims 1 to 16.
